# FASCICULE DE BREVET EUROPEEN

(11) **EP 1 533 536 B1**
(45) Date de publication et mention de la délivrance du brevet: **02.01.2008**
(21) Numéro de dépôt: 04292598.2
(22) Date de dépôt: 03.11.2004
(51) Int. Cl.: F16D 55/36

(54) **Frein pour roue d'aéronef, ensemble de roue freinée d'aréonef, et atterrisseur comportant une telle roue d'aéronef**
Bremse für ein Flugzeugrad, gebremstes Flugzeugrad, sowie Landegestell mit einem solchen Flugzeugrad
Brake for an aircraft wheel, braked aircraft wheel, and landing gear with such an aircraft wheel

(30) Priorité: 14.11.2003 FR 0313335
(43) Date de publication de la demande: 25.05.2005
(60) Demande divisionnaire: 06007941.5
(73) Titulaire: MESSIER-BUGATTI, 78140 Velizy Villacoublay (FR)
(72) Inventeur: Chico, Philippe, 92100 Boulogne-Billancourt (FR); Girod, Pierre, 75017 Paris (FR)
(74) Mandataire: Jaunez, Xavier

(56) Documents cités:
- US-A- 4 175 651
- US-A- 6 095 293
- US-B1- 6 581 730

## Description

L'invention concerne un atterrisseur, un frein d'aéronef, un ensemble de roue freinée d'aéronef, et un procédé de maintenance d'un tel atterrisseur.

### ARRIERE-PLAN DE L'INVENTION

On connaît du document US 6 095 293 un frein pour roue d'aéronef, comportant une pile de disques ayant un axe central et une structure de reprise du couple de freinage portant des actionneurs électromécaniques modulaires démontables unitairement s'étendant en regard de la pile de disques pour appliquer de façon commandée une pression sur la pile de disques.

Les actionneurs sont prévus pour être démontés du côté de la structure de reprise de couple opposé à la pile de disques.

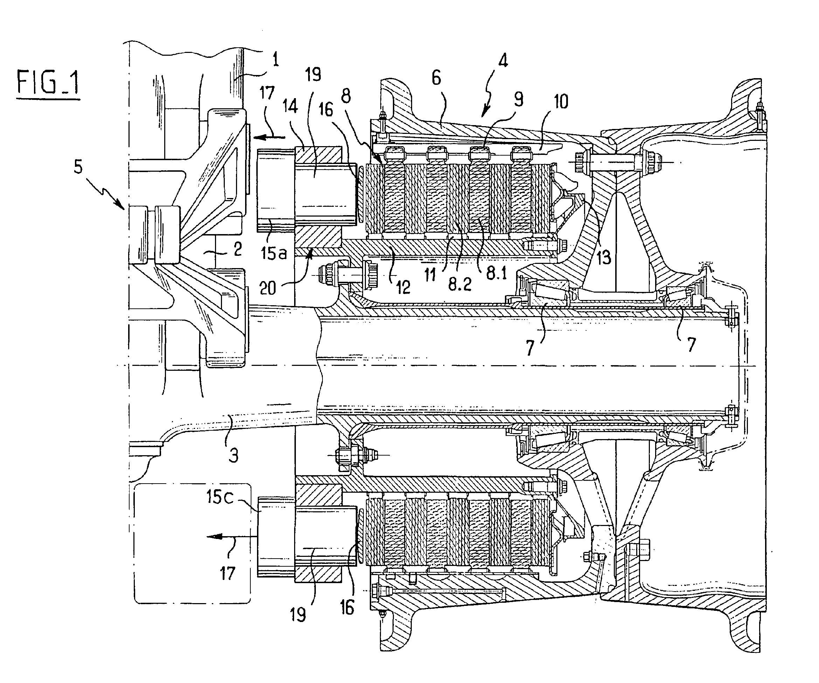

Néanmoins, dans certaines circonstances, il se peut que l'espace entre la structure de reprise de couple et l'atterrisseur soit insuffisant pour permettre le démontage d'un actionneur dans la direction précitée. On considérera à cet égard la figure 1 du document précité illustrant le cas de figure d'un actionneur équipant un frein d'aéronef et disposé, lorsque le frein est monté sur un atterrisseur de l'aéronef, directement en regard de l'atterrisseur de sorte que son démontage est impossible.

Il faut donc démonter la roue, puis le frein, pour permettre le démontage d'un actionneur ainsi disposé, ce qui rendrait la maintenance in situ d'un tel frein très problématique pour la compagnie utilisatrice d'un tel aéronef. En effet, une telle disposition oblige à mettre l'aéronef sur cric, à démonter la roue, puis la pile de disques, pour enfin démonter la structure de reprise de couple pour accéder à l'actionneur concerné. Une telle manipulation rend illusoire toute maintenance in situ limitée au remplacement de cet actionneur. Les compagnies préféreront, tant qu'à démonter l'ensemble de roue freinée, remplacer ledit ensemble par un autre ensemble, pour amener l'ensemble démonté en atelier de maintenance.

Il est en outre connu, du document US 6 581 730, un ensemble de roues freinées comprenant des actionneurs portés par un support solidaire de l'atterrisseur.

Si les actionneurs sont configurés pour permettre leur démontage du support sans perturber l'ensemble de frein composé de la pile de disques et du tube de torsion, ceci ne suffit cependant pas pour permettre un démontage de l'actionneur sur l'aéronef sans démontage de la roue. La figure 2 de ce document illustre d'ailleurs une situation dans laquelle les actionneurs ne sont pas directement démontables dans la mesure où ils buteraient sur la jante de la roue. Il faut donc mettre l'aéronef sur cric pour retirer la roue, ce qui enlève tout intérêt au démontage individuel des actionneurs.

### OBJET DE L'INVENTION

L'invention a pour objet de proposer un frein de roue d'aéronef qui comporte des actionneurs électromécaniques démontables unitairement pouvant être tous remplacés directement sur l'aéronef, sans nécessiter de mettre l'aéronef sur cric pour démonter la roue ou la pile de disques associée au frein. L'invention a également pour objet un ensemble de roue freinée, et un atterrisseur.

### BREVE DESCRIPTION DE L'INVENTION

L'invention est relative à un frein de roue d'atterrisseur d'aéronef, comprenant au moins un essieu pour porter au moins un ensemble de roue freinée qui comporte une roue avec une jante montée pour tourner sur l'essieu, une pile de disques ayant un axe central coïncidant avec un axe de rotation de la roue agencée pour imposer sur la roue un couple de freinage en réponse à une pression imposée sur la pile de disques, un support d'actionneurs électromécaniques modulaires démontables unitairement portant les actionneurs de façon qu'ils s'étendent en regard de la pile de disques pour appliquer de façon commandée une pression sur la pile de disques. L'atterrisseur et l'ensemble de roue freinée sont conformés de sorte que chaque actionneur soit dans l'une au moins des configurations suivantes :
- un espace libre de dimensions suffisantes pour recevoir l'actionneur s'étend, suivant une trajectoire de démontage, directement en regard de l'actionneur lorsqu'il est en position d'opération;
- l'actionneur est associé à des moyens de son déplacement depuis une position en opération à une position de démontage, un espace libre de dimensions suffisantes pour recevoir l'actionneur s'étendant, suivant une trajectoire de démontage, directement en regard de l'actionneur lorsqu'il est en position de démontage.

Grâce à ces dispositions, tous les actionneurs sont donc facilement démontables sans démontage de la roue ou la pile de disques. La maintenance in situ redevient techniquement et économiquement envisageable.

Selon un mode particulier de réalisation de l'atterrisseur, les actionneurs sont prévus pour être démontés d'un côté du support opposé à la pile de disques, l'essieu ayant une longueur suffisante pour qu'un espace libre s'étende, dans une direction axiale parallèle à l'essieu, en regard de chaque actionneur dudit côté de la pile de disques.

Selon un autre mode de réalisation de l'atterrisseur, les moyens de déplacement comportent au moins une portion de support qui est désolidarisable et déplaçable après désolidarisation pour déplacer au moins un actionneur d'une position en opération à sa position de démontage.

Selon un agencement particulier, l'ensemble du support des actionneurs est désolidarisable en bloc.

De préférence alors, le support est guidé en rotation par rapport à l'atterrisseur de façon à permettre, après désolidarisation, le déplacement par rotation d'au moins un actionneur depuis sa position en opération vers sa position de démontage.

Selon l'invention, le support comporte une partie de guide pour permettre aux actionneurs d'être démontés de leur support selon une trajectoire de démontage s'étendant sensiblement dans un plan perpendiculaire à un axe de rotation de la roue.

L'invention a donc pour objet un frein pour roue d'aéronef comportant une pile de disques ayant un axe central et un support portant au moins un actionneur électromécanique modulaire démontable unitairement s'étendant en regard de la pile de disques pour appliquer de façon commandée une pression sur la pile de disques, caractérisé en ce que le support comporte une partie de guide pour guider l'actionneur électronique le long d'une trajectoire de démontage s'étendant sensiblement dans un plan perpendiculaire à l'axe central de la pile de disques sans démontage de la pile de disques.

De préférence, la trajectoire de démontage s'étend selon une direction sensiblement rectiligne concourant avec l'axe central.

En variante, la trajectoire de démontage s'étend selon une direction sensiblement rectiligne ne concourant pas avec l'axe central. En variante encore, la trajectoire de démontage comporte une portion courbe.

L'invention est encore relative à un ensemble de roue freinée comportant un frein selon la revendication 1.

### BREVE DESCRIPTION DES DESSINS

L'invention sera mieux comprise à la lumière de la description qui suit en référence aux figures des dessins annexés parmi lesquelles :
- la figure 1 est une demi-vue en coupe partielle d'un d'atterrisseur équipé d'un ensemble de roue freinée
- la figure 2 est une vue de côté partielle schématique de l'atterrisseur de la figure 1 ;
- la figure 3 est une vue analogue à la figure 1 d'un atterrisseur équipé d'un autre ensemble de roue freinée
- la figure 4 est une vue analogue à la figure 1 d'un atterrisseur équipé d'un ensemble de roue freinée avec un frein selon l'invention ;
- la figure 5 est une vue en perspective de la couronne supportant les actionneurs et équipant l'ensemble de roue freinée illustré à la figure 4 ;
- les figures 6 et 7 sont des schémas de variantes de réalisation de la couronne de la figure 5 ;
- les figures 8 à 11 sont des schémas de variantes de réalisation des guides de la couronne recevant les actionneurs.

### DESCRIPTION DETAILLEE DE L'INVENTION

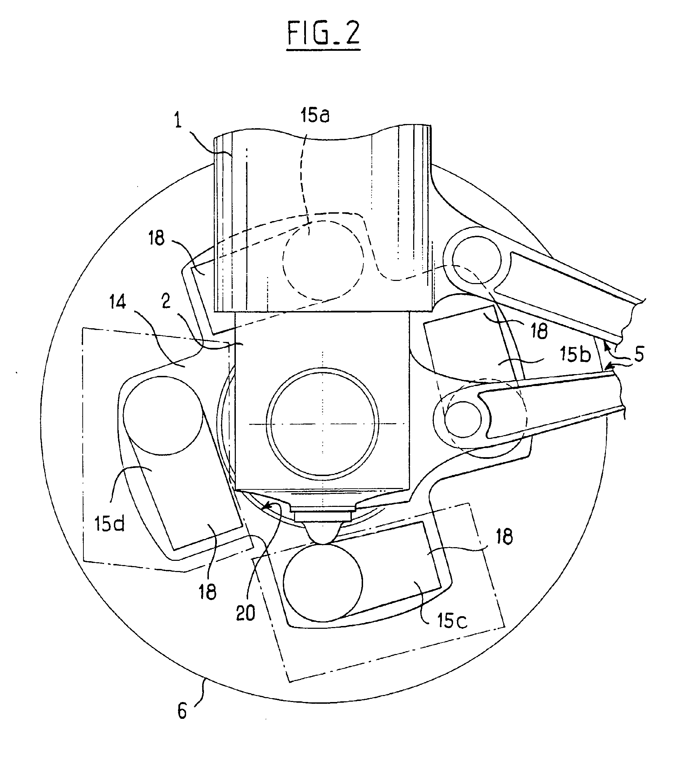

L'atterrisseur d'aéronef illustré aux figures 1 et 2 comprend un caisson 1 dans lequel coulisse une tige 2. Le caisson 1 est articulé à l'aéronef et est stabilisé en position basse par un dispositif de contreventement (non représenté). La tige 2 porte un essieu 3 en partie basse, destiné à recevoir un ensemble de roue freinée 4. La tige 2 est empêchée de tourner dans le caisson 1 par un compas 5 comprenant deux branches articulées respectivement au caisson 1 et à la tige 2.

L'ensemble de roue freinée comporte une roue comprenant une jante 6 qui porte un pneumatique non représenté et qui est montée pour tourner sur l'essieu 3 au moyen de roulements 7.

On parlera dans la suite de direction axiale pour désigner une direction parallèle à l'axe de la jante 6 lorsqu'elle est montée sur l'essieu 3, de direction radiale pour désigner une direction perpendiculaire à la direction précédente et concourant avec l'axe de la jante 6, et enfin de direction latérale pour désigner une direction perpendiculaire aux deux précédentes.

Dans l'intérieur de la jante 6 s'étend une pile de disques 8 ayant un axe central coïncidant avec l'axe de rotation de la jante 6. La pile de disques 8 comporte, en alternance, des disques rotors 8.1 (un seul est référencé) qui sont astreints à tourner avec la jante 6 par l'effet de l'engagement d'appendices 9 avec des cannelures 10 qui s'étendent à l'intérieur de la jante 6, et des disques stators 8.2 (un seul est référencé) qui sont astreints à rester immobile par l'effet de l'engagement d'appendices 11 reçus dans des cannelures (non visibles) d'un tube de reprise de couple 12 vissé sur l'essieu 3.

La pile de disques 8 s'étend entre un fond 13 fixe rapporté sur le tube de reprise de couple 12, et une couronne 14 également rapportée sur le tube de reprise de couple 12 (par des vis de fixation non représentées). La couronne 14 porte des actionneurs électromécaniques modulaires 15 qui comportent chacun un poussoir 16 déplaçable vers la pile des disques 8 au moyen d'un moteur électrique 18 (visible à la figure 2) pour appliquer de façon commandée une pression sur la pile de disques 8.

Les actionneurs 15 sont fixés de façon démontable sur la couronne 14 (au moyen de vis de fixation non représentées) et sont prévus pour être démontés du côté de la couronne 14 opposé à la pile de disques 8, c'est-à-dire dans la direction axiale vers le caisson 1 et la tige 2. Les actionneurs 15 comportent une partie de carter 19 qui s'étend au travers de la couronne 14. Les flèches 17 sur la figure 1 symbolisent la direction de démontage des actionneurs.

Comme cela est particulièrement visible à la figure 2, les actionneurs 15a et 15b sont, dans leur position en opération illustrée, directement en regard dans la direction 17 de la structure de l'atterrisseur, de sorte qu'ils ne sont pas démontables. Par contre, les actionneurs 15c et 15d disposent d'un espace libre qui s'étend en regard desdits actionneurs dans la direction 17 permettant leur démontage selon ladite direction. Ces espaces libres sont symbolisés sur les figures 1 et 2 par des zones délimitées par des traits mixtes.

Pour permettre le démontage des actionneurs 15a et 15b sur l'aéronef, on prévoit de rapporter la couronne 14 sur une portée cylindrique circulaire 20 du tube de reprise de couple 12. Pour démonter les actionneurs 15a ou 15b, il suffit alors de retirer les vis de fixation solidarisant la couronne 14 au tube de reprise 12, puis de faire tourner la couronne 14 sur la portée 20 de façon à amener l'actionneur 15a ou l'actionneur 15b dans une position de démontage (par exemple celle occupée en opération par l'actionneur 15c ou l'actionneur 15d). Dans cette position, les actionneurs 15a ou 15b peuvent alors être facilement démontés.

La portée 20 est particulièrement avantageuse en ce qu'elle permet un guidage de la couronne 14 en rotation qui est alors apte à tourner facilement sans risque de tomber sur l'essieu 3.

Selon une variante non représentée de ce mode de réalisation, la couronne 14 n'est plus rapportée sur le tube de reprise de couple 12, mais directement sur l'essieu 3. La portée 20 est alors aménagée sur une portion de l'essieu 3 pour recevoir la couronne 14 à rotation.

Selon une autre variante non représentée, la couronne n'est pas prévue pour être mobile en bloc après désolidarisation. Au moins un actionneur non démontable dans sa position en opération est alors monté sur une portion mobile de la couronne pour pouvoir amener ledit actionneur dans une position de démontage en regard de laquelle s'étend un espace libre.

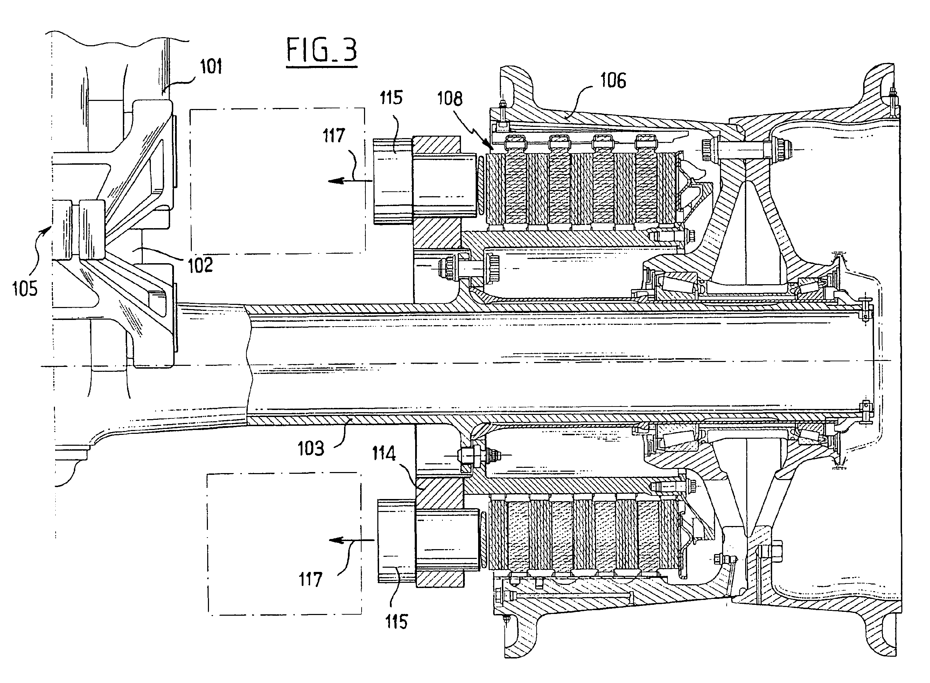

Dans l'atterrisseur illustré à la figure 3 sur laquelle les références des éléments correspondants avec ceux déjà référencés sont augmentés d'une centaine, les actionneurs 115 sont toujours prévus pour être démontés selon la direction axiale, symbolisée par les flèches 117. Ici, l'essieu 103 a une longueur suffisante pour qu'un espace libre s'étende en regard de tous les actionneurs, y compris ceux qui sont directement en regard de l'atterrisseur dans la direction axiale. Ici, les positions en opération de tous les actionneurs sont donc également des positions de démontage. Il est alors possible de démonter les actionneurs sans pour autant qu'il soit nécessaire de faire tourner la couronne 114.

Ce mode particulier de réalisation ne nécessite donc plus de prévoir un support des actionneurs désolidarisable et déplaçable, comme dans le mode de réalisation précédent, ce qui simplifie la conception générale de l'atterrisseur et de l'ensemble de roue freinée.

Néanmoins, la longueur ainsi donnée à l'essieu 3 a pour conséquence d'augmenter le poids de l'atterrisseur ainsi que son encombrement.

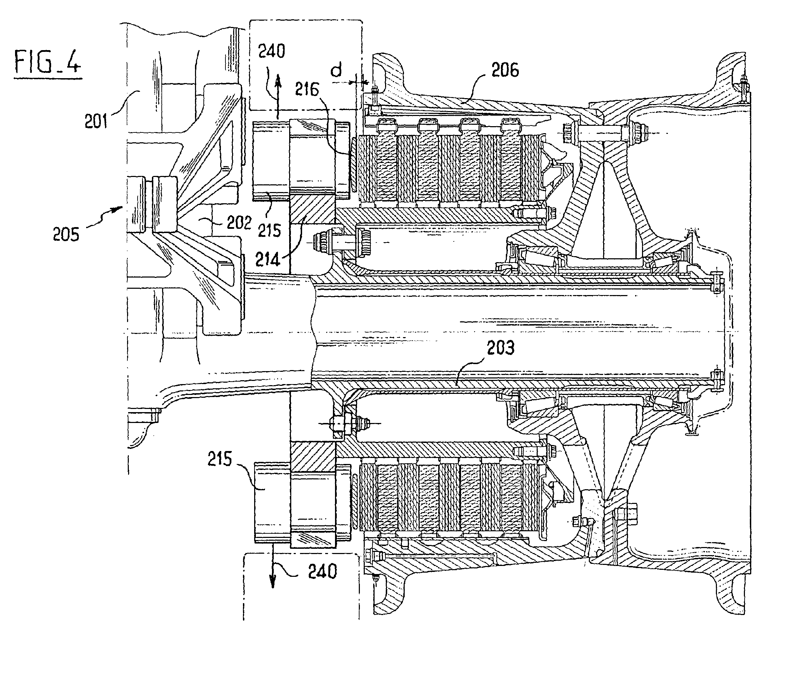

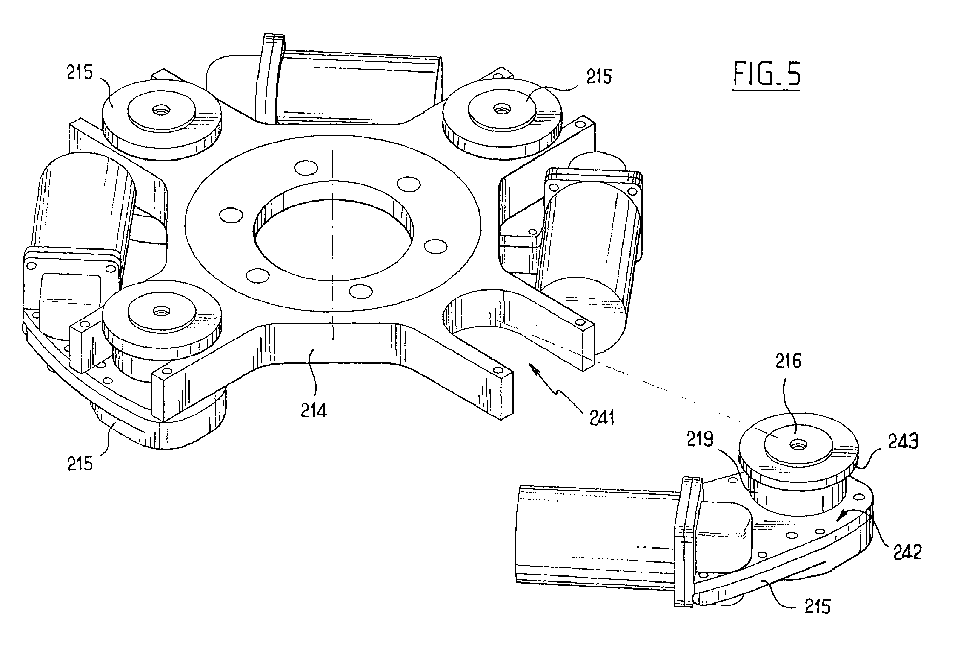

Ces inconvénients sont évités grâce à un mode particulier de réalisation de l'invention illustré aux figures 4 et 5 sur lesquelles les références des éléments correspondants avec ceux référencés précédemment sont encore augmentés d'une centaine.

Les actionneurs 215 et la couronne 214 sont prévus de sorte que les actionneurs soient démontables selon une direction 240 essentiellement radiale, concourante avec l'axe de la roue 206.

Comme cela est particulièrement visible à la figure 4, les espaces libres qui reçoivent les actionneurs en position démontée sont alors situés en regard du bord périphérique de la couronne, ce qui permet de raccourcir l'essieu 203 au strict nécessaire, tout en évitant, ici aussi, de prévoir une couronne désolidarisable.

Pour rendre ce démontage possible, il est important de s'assurer, au moins lorsque le poussoir 216 est en position rentrée, que celui-ci soit en retrait par rapport à la roue 206, comme cela est illustré sur la figure 4 par la distance d prise entre la face externe du poussoir 216 et l'extrémité de la jante 206.

En tout état de cause, il est avantageux de commander la rentrée du poussoir 216 avant de procéder au démontage de l'actionneur 215, d'une part pour réduire l'encombrement de l'actionneur 215 lors de sa manipulation, et d'autre part pour protéger le poussoir de chocs éventuels.

Comme cela est visible à la figure 5, la couronne 214 comporte des extensions radiales 241 en forme de U qui forment un guide aussi bien pour le montage que pour le démontage d'un actionneur 215. Pour faciliter la mise en place de l'actionneur, la partie de carter 219 qui s'étend au travers de la couronne 214 est délimitée d'une part par un flanc 242 du carter de l'actionneur et d'autre part par une collerette 243. Le flanc 242 et la collerette 243 sont séparés d'une distance légèrement supérieure à l'épaisseur des branches du U de l'extension radiale 241, et les branches du U sont écartées d'une distance légèrement supérieure au diamètre de la partie de carter 219, de sorte que l'extension radiale opère une guidage non seulement dans un sens latéral, mais également dans un sens axial.

Ce guidage facilite considérablement le démontage ou la mise en place des actionneurs, notamment pour les actionneurs qui sont situés sous l'essieu, dans une partie peu visible de l'atterrisseur.

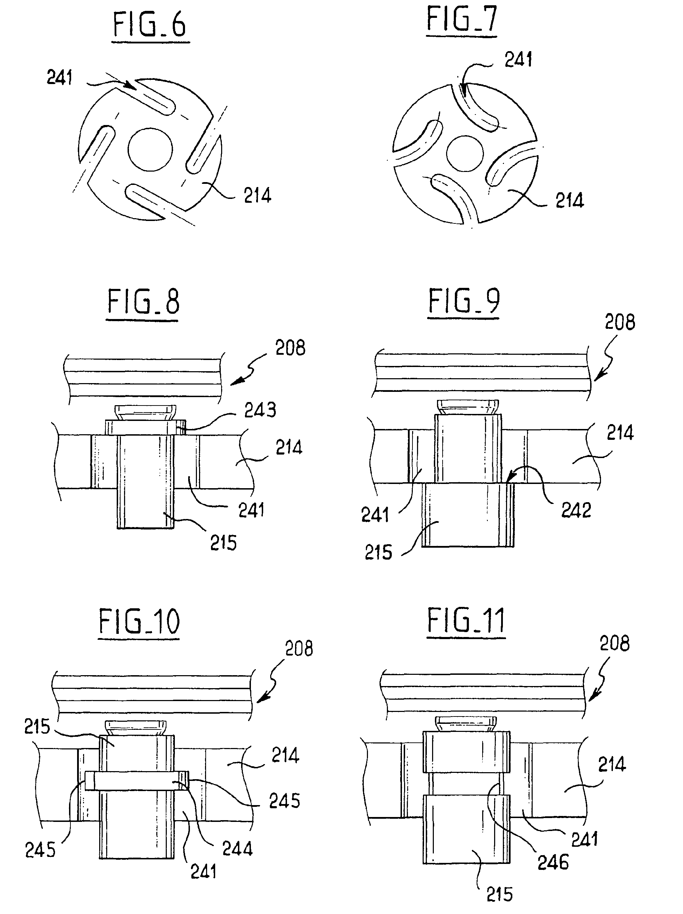

Selon une variante illustrée à la figure 6, les guides 241 définissent une direction de démontage qui n'est pas concourante avec l'axe central de la couronne 214. Cette liberté permet toutes les orientations possibles des directions de démontage des actionneurs, celles-ci pouvant même être différentes d'un actionneur à l'autre.

Selon une variante illustrée à la figure 7, les guides 241 peuvent ne pas être rectilignes, mais courbes, au moins en partie.

Il importe en tous les cas que la trajectoire de démontage s'étende sensiblement dans un plan perpendiculaire à l'axe central de la couronne, qui coïncide avec l'axe central de la roue ou de la pile de disques. On pourra admettre, tout en restant dans le cadre de l'invention, que la trajectoire de démontage comporte une légère composante axiale.

Selon un autre aspect de l'invention illustré aux figures 8 à 11, le guidage axial de l'actionneur 215 peut être assuré de plusieurs façons. Dans une première variante illustrée à la figure 8, l'actionneur 215 est en appui sur la couronne 214 uniquement du côté de celle-ci en regard de la pile de disques 208, par l'intermédiaire de la collerette 243. Le guidage n'est donc pas positif dans la direction axiale. Néanmoins, l'appui d'un seul côté est suffisant pour permettre une mise en place aisée de l'actionneur 215.

Selon une variante illustrée à la figure 9, l'actionneur est en appui sur la couronne 214 uniquement du côté opposé à la pile de disques 208.

Selon une variante illustrée à la figure 10, l'actionneur comporte une collerette 244 qui est engagée dans des rainures homologues 245 taillées dans les branches du U de l'extension radiale 241. Inversement, selon une variante illustrée à la figure 11, l'actionneur comporte une gorge 246 pour recevoir des tenons homologues 247 s'étendant en saillie intérieure des branches du U de l'extension radiale 241.

L'invention n'est pas limitée aux modalités particulières de l'invention qui viennent d'être décrites, mais bien au contraire englobe toute variante entrant dans le cadre de l'invention tel que défini par les revendications.

## Revendications

1. Frein pour roue d'aéronef, comportant une pile de disques (208) ayant un axe central et un support (214) portant au moins un actionneur électromécanique (215) modulaire démontable unitairement s'étendant en regard de la pile de disques pour appliquer de façon commandée une pression sur la pile de disques, **caractérisé en ce que** le support comporte une partie de guide (241) pour guider l'actionneur électromécanique (215) le long d'une trajectoire de démontage qui s'étend sensiblement dans un plan perpendiculaire à l'axe central, sans démontage de la pile de disques.

2. Frein selon la revendication 1 dans lequel la trajectoire de démontage s'étend selon une direction sensiblement rectiligne (2140) concourant avec l'axe central.

3. Frein selon la revendication 1 dans lequel le support comporte une extension radiale (241) en forme de U ayant des branches qui forment la partie de guide du support le long de la trajectoire de démontage.

4. Frein selon la revendication 1 dans lequel l'actionneur comporte des éléments de guidage (242, 243) qui coopèrent avec des éléments de guidage homologues du support pour guider axialement l'actionneur sur le support lors de son démontage le long de la trajectoire de démontage.

5. Ensemble de roue freinée comportant une roue (208) et un frein selon l'une des revendications précédentes, dans lequel la roue et le frein sont agencés de sorte que l'actionneur électromécanique (215) soit démontable alors que la pile de disques est en place dans la roue.

6. Atterrisseur comportant un ensemble de roue freinée selon la revendication 5, dans lequel l'atterrisseur et l'ensemble de roue freinée sont agencés de sorte que l'actionneur soit démontable alors que l'ensemble de roue freinée est en place sur l'atterrisseur.

## Claims

1. A brake for an airplane wheel comprising a stack of disks (208) having a central axis, and a support (214) comprising at least one modular electromechanical actuator (255) which is removable as a unit and that extends facing the stack of disks for applying pressure in controlled manner to the stack of disks, **characterized in that** the support comprises a guide portion (241) for guiding the electromechanical actuator along a disassembly trajectory that extends substantially into a plane perpendicular to said central axis, without removal of the stack of disks.

2. A brake according to claim 1, wherein the disassembly trajectory extends along a direction that is substantially rectilinear and intersects the central axis.

3. A brake according to claim 1, wherein the support comprises a radial extension (241) in form of a U having branches that from the guide portion of the support along the disassembly trajectory.

4. A brake according to claim 1, wherein the actuator comprises guiding elements (242, 243) that cooperate with corresponding guiding elements of the support of axially guiding the actuator on the support during its disassembly along the disassembly trajectory.

5. A brake-and-wheel assembly having a wheel (208) and a brake according to one of the preceding claims, wherein the wheel and the brake are configured so that the actuator is removable while the stack of disks is in place in the wheel.

6. Landing gear comprising a brake-and-wheel assembly according to claim 5, wherein the landing gear and the brake-and-wheel assembly are configured so that the actuator is removable while the brake-and-wheel assembly is in place on the landing gear.

## Patentansprüche

1. Bremse für ein Flugzeugrad, umfassend einen Stapel (208) von Scheiben, der eine Mittelachse hat, sowie einen Träger (214), der mindestens einen modularen, als Einheit abnehmbaren elektromechanischen Aktuator (215) trägt, der sich gegenüber dem Stapel von Scheiben erstreckt, um auf gesteuerte Weise einen Druck auf den Stapel von Scheiben auszuüben, **dadurch gekennzeichnet, dass** der Träger einen Führungsabschnitt (241) umfasst, der dazu bestimmt ist, den elektromechanischen Aktuator (215) entlang einer Demontagebahn zu führen, die sich im Wesentlichen in einer zur Mittelachse senkrechten Ebene erstreckt, ohne eine Demontage des Stapels von Scheiben.

2. Bremse nach Anspruch 1, wobei sich die Demontagebahn in einer im Wesentlichen geradlinigen Richtung (240) erstreckt, die sich mit der Mittelachse kreuzt.

3. Bremse nach Anspruch 1, wobei der Träger eine radiale U-förmige Verlängerung (241) hat, deren Schenkel den Führungsabschnitt des Trägers entlang der Demontagebahn bilden.

4. Bremse nach Anspruch 1, wobei der Aktuator Führungselemente (242, 243) umfasst, die mit homologen Führungselementen des Trägers zusammenwirken, um den Aktuator während seiner Demontage an dem Träger entlang der Demontagebahn axial zu führen.

5. Anordnung gebremster Räder, umfassend ein Rad (208) und eine Bremse nach einem der vorhergehenden Ansprüche, wobei das Rad und die Bremse derart angeordnet sind, dass der elektromechanische Aktuator (215) demontiert werden kann, während der Stapel von Scheiben am Rad verbleibt.

6. Fahrwerk, umfassend eine Anordnung gebremster Räder nach Anspruch 5, wobei das Fahrwerk und die Anordnung gebremster Räder derart angeordnet sind, dass der Aktuator demontiert werden kann, während die Anordnung gebremster Räder am Fahrwerk verbleibt.
